# DEMANDE DE BREVET EUROPEEN

(11) **EP 2 256 008 A1**
(43) Date de publication de la demande: **01.12.2010**
(21) Numéro de dépôt: 10305503.4
(22) Date de dépôt: 11.05.2010
(51) Int. Cl.: B60R 22/18, A44B 11/25

(54) **Dispositif de protection visant à retenir un passager sur un siège de véhicule automobile et siège de véhicule automobile associé**

(30) Priorité: 25.05.2009 FR 0902511
(71) Demandeur: Renault S.A.S., 92100 Boulogne-Billancourt (FR)
(72) Inventeur: Cabrie, Dominique, 78000, Versailles (FR); Francisco, Paulo, 78470, Saint Rémy Les Chevreuses (FR)

(57) **Abrégé**

L'invention concerne un dispositif de protection visant à maintenir un passager sur un siège de véhicule automobile, ledit dispositif étant du type comportant un pêne (3) apte à être inséré dans une gâche (1) et retenu dans ladite gâche par des moyens de blocage, ladite gâche (1) comportant une fente horizontale (17) et ledit pêne (3) étant apte à être monté coulissant sur une sangle de ceinture de sécurité et comportant une portion de liaison (31) apte à être insérée dans ladite gâche (1) de manière à être retenue par lesdits moyens de blocage.

Selon l'invention, ladite portion de liaison (31) est solidaire d'une portion sphérique de retenue (33) et ladite gâche (1) comporte une fente verticale (16) qui communique avec ladite fente horizontale (17) et permet l'introduction dudit pêne (3) dans ladite gâche (1) selon une direction d'insertion sensiblement horizontale.

## Description

La présente invention concerne un dispositif de protection ou de sécurité visant à retenir un passager sur un siège de véhicule automobile et un siège de véhicule automobile qui comporte un tel dispositif.

Les véhicules automobiles comportent, de manière standard des ceintures de sécurité qui permettent, en cas de choc, de retenir le passager sur son siège. La ceinture de sécurité comporte une sangle, équipée d'un pêne coulissant, et une gâche, apte à retenir et bloquer le pêne. Une première extrémité de la sangle est fixée, en partie basse, sur la structure du véhicule, tandis que la deuxième extrémité de la sangle coopère avec un enrouleur. Le pêne est monté de manière à coulisser sur la sangle. Le pêne comporte une portion de fixation ou de retenue, qui est apte à coopérer avec des moyens de blocage équipant la gâche, pour bloquer et maintenir le pêne dans la gâche.

La gâche est fixée sur le siège ou à un support relié à la structure du véhicule. La gâche comporte des moyens de blocage du pêne. Ces moyens de blocage sont internes et peuvent être désactivés ou déverrouillés, au moyen d'un élément de commande, du type bouton poussoir, disposé sur la gâche, pour permettre la sortie du pêne hors de la gâche. La gâche présente une fente horizontale qui permet l'insertion et le retrait du pêne. Le pêne est inséré dans la gâche par la fente horizontale, selon un mouvement sensiblement vertical, selon une direction sensiblement perpendiculaire au plan de la gâche dans lequel est ménagée la fente horizontale. Quand la portion de fixation du pêne est bloquée dans la gâche par les moyens de blocage, le pêne traverse la fente horizontale.

L'insertion du pêne dans la gâche selon le mouvement sensiblement vertical précité n'est pas aisée. Ce mouvement est en revanche pratique pour le retrait du pêne hors de la gâche car il permet à l'enrouleur de la sangle de ceinture de sécurité d'exercer une force sur le pêne qui aide au retrait de ce dernier hors de la gâche.

Un but de la présente invention est de proposer un dispositif de protection visant à retenir un passager sur un siège de véhicule automobile qui facilite l'insertion du pêne dans la gâche.

Ce but est atteint au moyen d'un dispositif de protection visant à maintenir un passager sur un siège de véhicule automobile, ledit dispositif étant du type comportant un pêne, apte à être inséré dans une gâche et retenu dans ladite gâche par des moyens de blocage dudit pêne qui sont aptes à être désactivés pour permettre le retrait dudit pêne hors de ladite gâche ;
- ladite gâche étant apte à être fixée audit siège ou à la structure dudit véhicule automobile et comportant une fente horizontale ; et
- ledit pêne étant apte à être monté coulissant sur une sangle de ceinture de sécurité qui est fixée à la structure d'un véhicule, ledit pêne comportant une portion de liaison apte à être insérée dans ladite gâche de manière à être retenue par lesdits moyens de blocage, ledit pêne traversant ladite fente horizontale quand ladite portion de liaison est retenue dans ladite gâche par lesdits moyens de blocage.

Selon l'invention, de manière caractéristique, ladite portion de liaison est solidaire d'une portion sphérique de retenue qui est apte à être insérée dans ladite gâche pour être retenue par lesdits moyens de blocage et ladite gâche comporte une fente verticale qui communique avec ladite fente horizontale et permet l'introduction dudit pêne dans ladite gâche, selon une direction d'insertion sensiblement horizontale.

Lorsque le dispositif équipe un siège de véhicule automobile, la direction d'insertion peut être longitudinale ou transversale par rapport audit véhicule.

Le retrait du pêne hors de la gâche s'effectue, avantageusement à travers une portion élargie de la fente horizontale.

Les moyens de blocage ne sont pas limités selon l'invention,

Selon un mode de réalisation, lesdits moyens de blocage comportent :
- un capot de blocage apte à coopérer avec ladite portion sphérique de retenue dudit pêne et monté mobile entre une position verrouillée dans laquelle ledit capot obture ladite fente horizontale et une position déverrouillée dans laquelle ledit capot est éloigné de ladite fente horizontale de manière à libérer ledit pêne ; et
- un organe de commande accessible par l'utilisateur et qui permet de faire passer ledit capot de blocage de ladite position verrouillée à ladite position déverrouillée.

Le capot de blocage évite ainsi la sortie intempestive du pêne à travers la fente horizontale.

Avantageusement, ledit capot de blocage comporte des moyens de rappel élastiques qui sont disposés de manière à être mis en contrainte, lorsque ladite portion sphérique de retenue coopère avec ledit capot et lesdits moyens de rappel exercent une force apte à pousser ladite portion de liaison du pêne hors de ladite gâche, à travers ladite fente horizontale. Le retrait du pêne s'effectue, par exemple, à travers une portion élargie de la fente horizontale ce qui permet de bénéficier de la force exercée par l'enrouleur de la sangle de la ceinture, lorsque celle-ci en comporte un. L'éjection verticale est également préférable pour des questions de sécurité, la fente verticale pouvant être difficilement accessible selon la position du véhicule en cas d'accident.

Avantageusement, les moyens de blocage comportent en outre, une butée, montée mobile dans ladite gâche, entre une position verrouillée dans laquelle elle obture ladite fente verticale, empêchant ainsi ledit pêne qui coopère avec ladite gâche de sortir par ladite fente verticale, et une position déverrouillée dans laquelle ladite butée est abaissée de manière à laisser entrer ladite portion de liaison dudit pêne dans ladite gâche le long de ladite fente horizontale.

De tels moyens de blocage permettent de bloquer le pêne dans la gâche selon deux directions orthogonales qui correspondent aux seules directions possibles de mouvement du pêne dans la gâche.

La présente invention concerne également un siège de véhicule automobile du type comportant une assise et un dossier, ladite assise comportant un bord libre opposé audit dossier. Selon l'invention, le siège comporte un dispositif selon l'invention et ladite fente horizontale s'étend dudit bord libre vers ledit dossier.

La fente horizontale peut être disposée sensiblement dans le plan de ladite assise de manière à pouvoir, par exemple, rabattre le dossier sur l'assise pour obtenir une surface plane.

Afin de faciliter l'insertion du pêne, le siège peut comporter des rainures ménagées dans ladite assise de manière à guider ledit pêne vers ladite fente verticale de ladite gâche.

La présente invention, ses caractéristiques et les différents avantages qu'elle procure apparaitront plus clairement à la lecture de la description qui suit de deux modes de réalisation particuliers de l'invention et qui fait référence aux dessins annexés, sur lesquels :
- la Figure 1 représente une vue de détail d'un siège de véhicule automobile équipé d'un premier mode de réalisation du dispositif de l'invention ;
- la Figure 2 représente une vue en perspective de la gâche et du pêne d'un second mode de réalisation de l'invention ;
- les Figures 3a à 3d représentent des vues en perspective de la gâche et des moyens de blocage ; et
- les Figures 4a à 4d représentent les moyens de blocage, lors du verrouillage du pêne et du retrait de ce dernier hors de la gâche, lorsque les moyens de blocage sont déverrouillés.

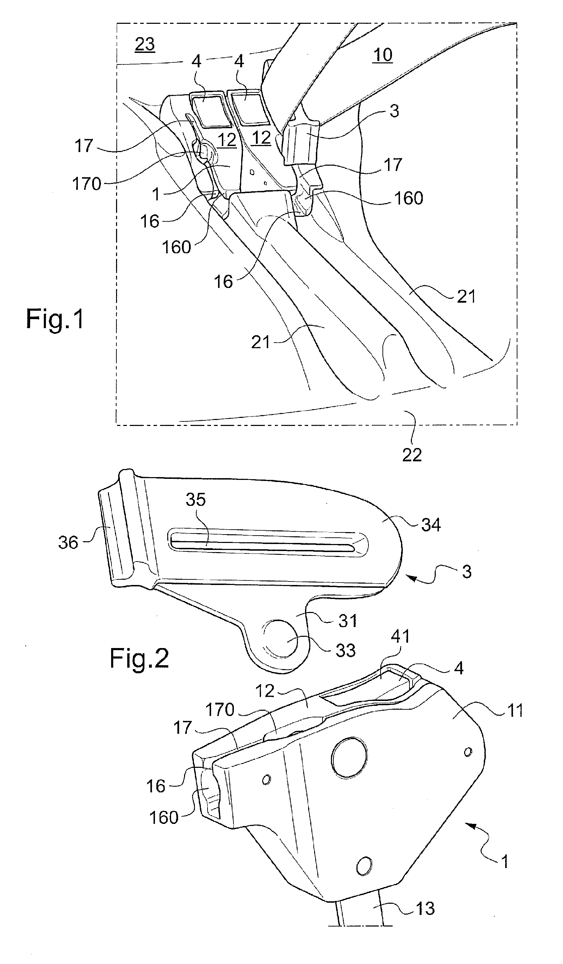

En référence à la Figure 1, le dispositif de sécurité de l'invention est ici implanté sur une banquette arrière de véhicule automobile. La banquette présente une assise 2 dans laquelle sont formées des rainures 21. Ces rainures 21 sont creusées dans la mousse de la banquette et forment donc des cavités. Les rainures 21 s'étendent entre le bord libre 22 de l'assise 2 et le bord relié au dossier 23. Ces rainures 21 s'étendent donc longitudinalement au véhicule. Dans le cas présent, le mode de réalisation de l'invention, ici représenté, comporte une double gâche qui permet la fixation de deux ceintures de sécurité, pour deux passagers situés côte-à-côte sur la banquette. La double gâche est insérée dans l'assise 2 de la banquette. Chaque gâche 1 comporte une surface supérieure 12 qui affleure au niveau de la surface supérieure de l'assise 2. Une fente horizontale 17 est ménagée dans cette surface supérieure 12. La fente horizontale 17 s'enfonce verticalement dans la gâche 1. La fente horizontale 17 s'étend également selon la longueur de l'assise, c'est-à-dire longitudinalement au véhicule, depuis le bord libre 22 de l'assise jusqu'au dossier 23, parallèlement aux rainures 21. La fente horizontale 17 présente une portion élargie, de plus grande largeur 170, qui permet le passage du pêne 3, lors du retrait de ce dernier. La gâche 1 présente également une fente verticale 16, située à l'extrémité de la rainure 21 qui est orientée vers le dossier 23. La fente verticale 16 est sécante avec l'extrémité de la fente horizontale 17 qui est orientée vers le bord libre 22 de l'assise 2. La fente verticale 16 présente une portion de plus grande largeur 160 qui forme un passage pour le pêne 3.

Comme représenté sur la Figure 1, sur chacune des gâches 1, un bouton de commande 4 affleure au niveau de la surface supérieure 12. Le pêne 3 est monté coulissant sur la sangle 10 d'une ceinture de sécurité.

En référence à la Figure 2, selon un second mode de réalisation dont les éléments en commun avec le premier mode de réalisation sont référencés à l'identique, et qui peut être utilisé pour un siège avant, par exemple, la gâche 1 comporte un boîtier 11 qui est fixé à l'extrémité d'un support 13 qui est apte à être relié à la structure d'un véhicule automobile. Ce boîtier 11 présente une face supérieure 12 dans laquelle est ménagée la fente horizontale 17.

Comme représenté sur la Figure 2, le pêne 3 comporte une portion de liaison 31 qui présente une forme de languette. La portion de liaison 31 comporte une portion sphérique retenue 33 qui fait saillie de part et d'autre de l'épaisseur (ou tranche) de la portion de liaison 31. Le pêne 3 comporte également un anneau 34 qui forme un passage 35 pour une sangle 10 de ceinture de sécurité. Cet anneau 34 prolonge la portion de liaison 31 selon une direction sensiblement perpendiculaire à la portion de liaison 31. L'extrémité de l'anneau 34 présente une gouttière 36 sensiblement perpendiculaire au passage 35, qui aide à la préhension du pêne 3 et à son insertion dans la gâche 1 le long de la fente horizontale 17.

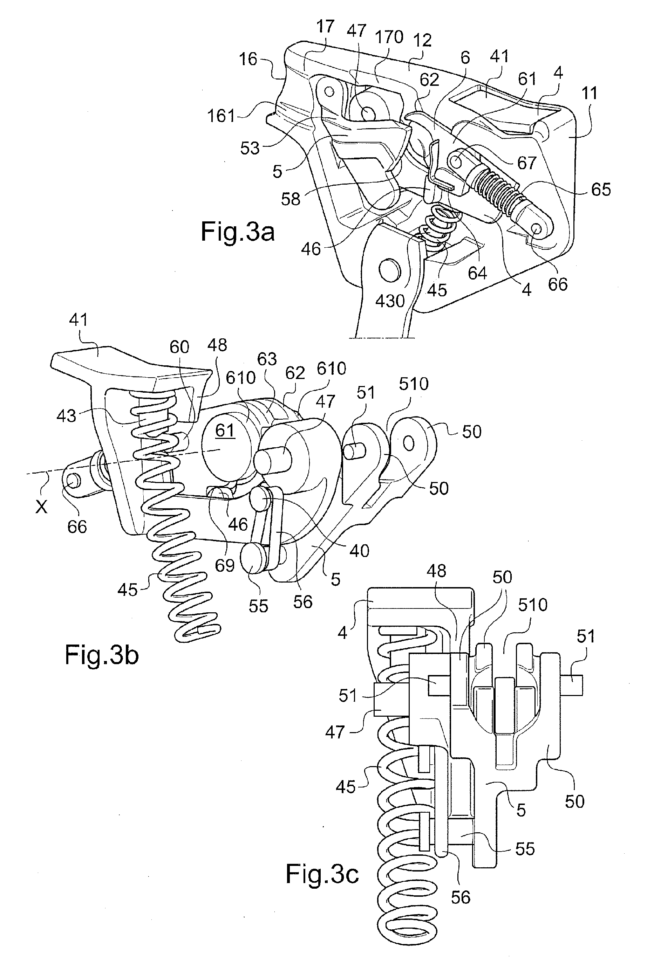

En référence aux Figures 3a à 3d, l'intérieur de la gâche 1 va maintenant être décrit. La gâche 1 est formée de deux demi-boîtiers assemblés 11, selon la fente horizontale 17. Un seul demi-boîtier est représenté sur la Figure 3a et aucun sur les Figures 3b à 3d. Les moyens de blocage du pêne 3 comportent une butée-guide 5, un capot de blocage 6 et l'organe de commande 4, encore dénommé ici, « bouton poussoir ».

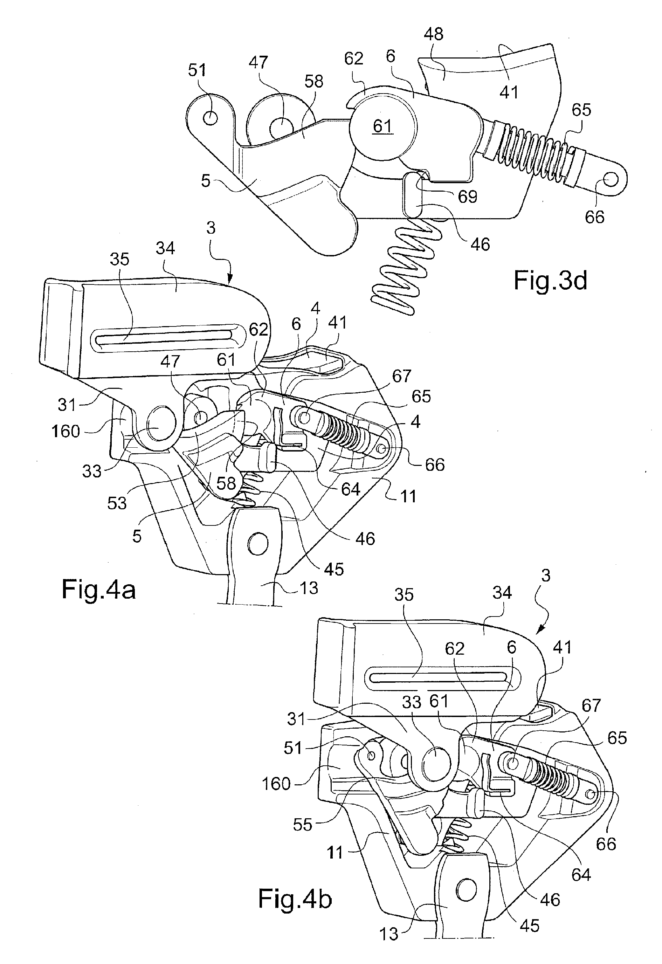

Comme représenté sur les Figures 3a à 3d, le bouton poussoir 4 présente une portion sensiblement verticale qui supporte une surface de commande 41. La surface de commande 41 affleure au niveau de la surface supérieure 12 du boîtier 1. Un doigt de guidage 43 (voir figure 3b), solidaire du dessous de la surface de commande 41, bloque l'extrémité d'un ressort de rappel 45. L'autre extrémité du ressort de rappel 45 prend appui autour d'un doigt de blocage 430 disposé sur une surface du boîtier 11 (voir Fig. 3a) de manière à maintenir la surface de commande 41 au niveau de la surface supérieure 12 du boîtier 11. Le bouton poussoir 4 comporte une portion sensiblement horizontale qui prolonge l'extrémité inférieure de la portion verticale précitée. Cette portion sensiblement horizontale se prolonge par un coude à l'extrémité duquel se trouve l'axe de rotation 47 du bouton poussoir 4. L'axe de rotation 47 est transversal au boîtier 11 et déporté vers la fente verticale 16, par rapport à la surface de commande 41. L'axe de rotation 47 est sensiblement disposé au milieu de la hauteur du boîtier 11. Un bossage 46 (voir Fig. 3a, 3b et 3d) est disposé sur la portion horizontale, à proximité de la portion verticale et sert d'appui au capot de blocage 6, en position verrouillée, de manière à éviter la rotation du capot de blocage 6, comme expliqué ultérieurement. Une nervure 48 verticale, située sous la surface de commande 41, s'étend dans le boîtier 11. Cette nervure verticale 48 vient coopérer avec un doigt d'actionnement 60 disposé sur le côté du capot de blocage 6, comme expliqué ultérieurement.

Comme représenté sur les Figures 3a à 3d, la butée guide 5 est disposée dans le boîtier 11, à proximité de la fente verticale 16. La butée guide 5 comporte deux paliers coaxiaux 50 (voir Fig. 3b, 3c), séparés par une ouverture 510 pour laisser passer la portion de liaison 31 et la portion sphérique de retenue 33 du pêne 3, à travers et le long de la fente horizontale 17 (lors de l'entrée du pêne 3 en phase de verrouillage). Ces deux paliers 50 sont montés à rotation autour de deux axes 51, transversaux au boîtier 11 et situés au niveau de l'extrémité supérieure de la fente verticale 16, dans le boîtier 11. En référence à la Figure 3a, la butée guide 5, vue en coupe, présente deux surfaces, de guidage 53, symétriques par rapport à l'ouverture 510, qui prolongent le fond horizontal 161 de la fente verticale 16. Le fond horizontal 161 étant formé par un épaulement interne au boîtier 11. Les surfaces de guidage 53 présentent une portion horizontale, disposée à proximité du fond 161, qui se prolonge par une pente orientée vers la fente horizontale 17. Cette portion arrière qui remonte vers la fente 17 présente deux tranches verticales 58, symétriques par rapport à l'ouverture 510, qui servent d'arrêtoir à la portion sphérique de retenue 33 du pêne, comme expliqué ultérieurement. Un axe épaulé 55 situé en dessous des axes de rotation 51 et décalé vers le ressort de rappel 45 par rapport à ce dernier, vient en appui sur le dessous de la portion horizontale du bouton poussoir 4. Une bande élastique 56 relie l'axe épaulé 55 de la butée guide 5 à un téton 40 disposé sur le bouton poussoir 4, en dessous de l'axe de rotation 47 de ce dernier. La bande élastique 56 permet de maintenir l'axe épaulé 55 en appui sur le dessous de la portion horizontale du bouton poussoir 4.

En référence aux figures 3a à 3d, le capot de blocage 6 comporte une portion de blocage 61, creuse, en forme de sphère, qui coopère avec la portion sphérique de retenue 33 du pêne 3 pour le blocage de ce dernier. La portion de blocage 61 comporte une portion supérieure 62 qui vient, en position de blocage, comme représenté sur les Figures 3a et 3b, se placer en dessous de la fente horizontale 17 de manière à boucher cette dernière. Cette portion supérieure 62 comprend une fente 63 (voir figure 3b) qui permet le passage de la portion de liaison 31 du pêne 3 à travers la portion de blocage 61, selon un mouvement de translation le long de la fente 17. Le capot de blocage 6 est guidé en rotation sur le boîtier 11, autour d'un axe X transversal au boîtier 11 et défini par deux paliers 610 coaxiaux à la forme sphérique creuse de la portion de blocage 61. Un ressort de rappel 65, en position bistable, est monté entre un axe d'articulation 66 solidaire du boîtier 11 et un axe d'articulation 67 solidaire du capot de blocage 6. Le ressort de rappel 65 a une double fonction. Premièrement, il maintient le capot de blocage 6 dans sa position verrouillée ou de blocage, c'est-à-dire lorsque la portion supérieure 62 est disposée en regard de la fente horizontale 17 (plus particulièrement au niveau de la portion élargie 170 de la fente horizontale 17). Deuxièmement, du fait de son état bistable, lorsque le capot 6 pivote de manière à libérer le pêne 3, le ressort de rappel 65 permet également de maintenir le capot de blocage 6 pivoté, la partie supérieure 62 de ce dernier ayant basculé vers le fond du boîtier 11, en direction de la surface de commande 41 afin de permettre le passage du pêne 3 à travers la portion élargie 170 de la fente 17. Un ressort à lame 64 est monté sur le capot de blocage 6 de manière à venir en contact avec la tranche de la portion de liaison 31 du pêne 3 quand celui-ci est bloqué dans le capot de blocage 6. La portion de liaison 31 vient mettre en contrainte le ressort à lame 64, lors du verrouillage du pêne 3. Ce ressort à lame permet d'absorber les vibrations et les jeux de positionnement du pêne 3 par rapport au capot de blocage 6 et favorise l'éjection du pêne 3 hors de la gâche 1. Une zone d'appui 69 (voir figure 3d) est ménagée dans la partie basse du capot de blocage 6. Cette zone d'appui 69 vient coopérer avec le bossage 46 pour maintenir le capot de blocage en position verrouillée.

Le fonctionnement du dispositif de l'invention, va maintenant être décrit en référence aux Figures 4a à 4d.

Le verrouillage du pêne 3 va être décrit en référence aux figures 4a à 4c.

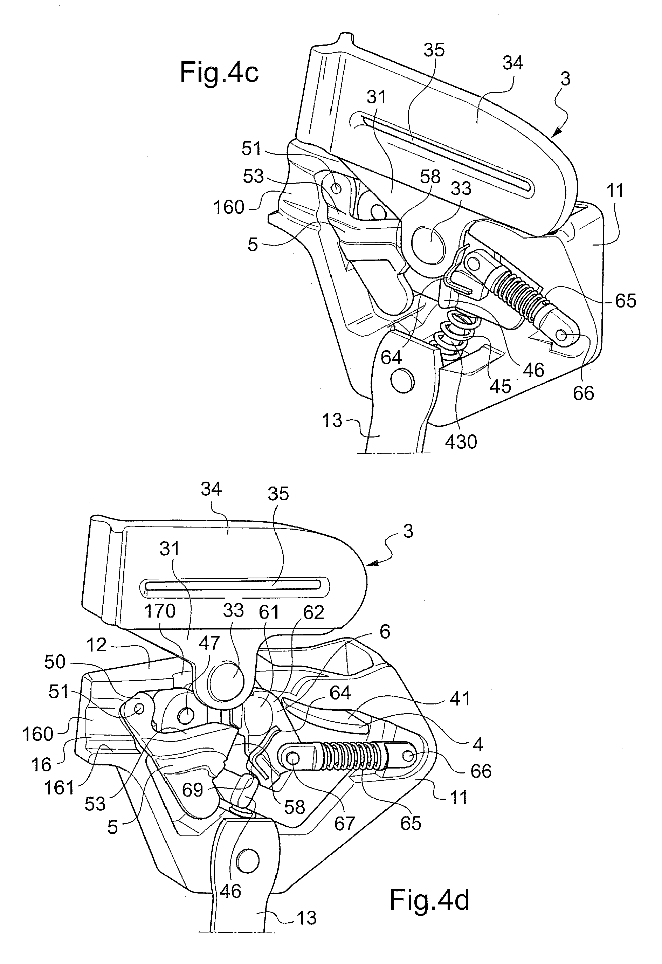

Sur la figure 4a qui représente le début de la phase d'introduction du pêne 3 dans la gâche 1, le capot de blocage 6 et la butée guide 5 sont tous deux dans leur position verrouillée qui est la même que lorsque le pêne 3 est bloqué dans la gâche 1 (voir figure 4c).

Comme représenté sur la Figure 4a, la portion de liaison 31 est introduite dans la fente 16. La portion sphérique de retenue 33 est introduite dans la portion 160 de largeur plus importante. La tranche de la portion de liaison 31 passe entre les deux paliers 50 de la butée guide 5, glisse et appuie sur les surfaces de guidage 53 de la butée guide 5 et fait basculer cette dernière vers le support 13. Ce basculement est mis en oeuvre sans mouvement du bouton poussoir 4 grâce à l'élasticité de la bande élastique 56 qui exerce une force moins importante que celle exercée par le ressort de rappel 45. Lorsque le pêne 3, poussé dans la fente 17 par l'utilisateur, arrive au niveau de la portion élargie 170 de la fente 17, il n'est plus en appui sur les surfaces de guidage 53 de la butée guide 5. Sous l'effet de la force exercée par la bande élastique 56, la butée guide 5 remonte le long de la tranche de la portion de liaison 31, vers la fente horizontale 17. Les tranches 58 de la portion arrière de la butée guide 5 forment alors deux surfaces de butées sensiblement verticales qui viennent en contact avec portion sphérique de retenue 33 du pêne 3, l'empêchant ainsi de ressortir par la fente verticale 16 (voir figure 4c). Dans le même temps, la portion sphérique de retenue 33 du pêne 3 vient se loger dans la forme sphérique creuse de la portion de blocage 61 du capot de blocage 6, la portion de liaison 31 passant dans la fente 63. La portion supérieure 62 du capot de blocage 6 étant située sous la portion élargie 170 de la fente 17, elle empêche la portion sphérique de retenue 33 et donc le pêne 3 de sortir par la portion élargie 170 de la fente horizontale 17. Le pêne 3 est ainsi bloqué dans la gâche 1. Dans cette position, le ressort à lame 64 est mis en contrainte par la tranche de la portion de liaison 31 du pêne 3. Le pêne 3 est donc bloqué dans la gâche 1 par la portion supérieure 62 du capot de blocage 6 et par les tranches verticales 58 de la portion arrière de la butée guide 5.

Les efforts principaux de retenue du passager passent donc par la butée sphérique 33 de pêne 3, la forme sphérique creuse de la portion de blocage 61 et les paliers 610 du capot de blocage 6, de même que les logements de ces paliers inclus dans le boîtier 11.

On va maintenant décrire les étapes du déverrouillage des moyens de blocage, en référence aux Figures 4c et 4d.

L'utilisateur appuie sur la surface de commande 41 du bouton poussoir 4 pour déverrouiller le dispositif de sécurité. Le bouton poussoir 4 pivote autour de son axe 47 et s'enfonce dans le boîtier 11 de la gâche 1. La rotation du bouton poussoir 4 entraîne en rotation la butée guide 5 pour libérer le pêne 3. Dans le même temps, lorsque le bouton poussoir 4 pivote, la nervure 48 vient appuyer sur le doigt d'actionnement 60 pour faire pivoter le capot 6 autour de l'axe X. Cette rotation a pour effet de désengager le bossage 46 de la zone d'appui 69 ménagée à cet effet dans le bas du capot de blocage 6. Le ressort de rappel 65 pousse le capot de blocage 6 de manière à le faire pivoter dans la direction de la portion verticale du bouton poussoir 4. La portion supérieure 62 du capot de blocage 6 pivote donc vers la surface de commande 41 du bouton poussoir 4, libérant la portion sphérique de retenue 33 du pêne 3. Le ressort 65 étant bistable, il maintient alors le capot de blocage 6 de manière à dégager le pêne 3. Le ressort à lame 64 pousse alors la portion de liaison 31 du pêne hors de la gâche 1. Le pêne 1 sort alors à travers la portion élargie 170 de la fente horizontale 17, selon un mouvement sensiblement vertical. L'enrouleur de la sangle de sécurité 10 tire sur la sangle 10 et aide au retrait du pêne 3.

Afin d'assurer la sécurité de débouclage en toutes circonstances, le pêne 3 n'a la seule possibilité de s'éjecter qu'à travers la portion élargie 170 de la fente horizontale 17.

## Revendications

1. Dispositif de protection visant à maintenir un passager sur un siège de véhicule automobile, ledit dispositif étant du type comportant un pêne (3) apte à être inséré dans une gâche (1) et retenu dans ladite gâche par des moyens de blocage (5 ; 6) dudit pêne qui sont aptes à être désactivés pour permettre le retrait dudit pêne (3) hors de ladite gâche (1) ;
- ladite gâche (1) étant apte à être fixée audit siège ou à la structure d'un véhicule automobile et comportant une fente horizontale (17) ;
- ledit pêne (3) étant apte à être monté coulissant sur une sangle (10) de ceinture de sécurité qui est fixée à ladite structure, ledit pêne (3) comportant une portion de liaison (31) apte à être insérée dans ladite gâche (1) de manière à être retenue par lesdits moyens de blocage (5 ; 6), ledit pêne traversant ladite fente horizontale (17) quand ladite portion de liaison (31) est retenue dans ladite gâche (1) par lesdits moyens de blocage (5 ; 6) ;
**caractérisé en ce que** ladite portion de liaison (31) est solidaire d'une portion sphérique de retenue (33) qui est apte à être insérée dans ladite gâche pour être retenue par lesdits moyens de blocage (5 ; 6) et **en ce que** ladite gâche (1) comporte une fente verticale (16) qui communique avec ladite fente horizontale (17) et permet l'introduction dudit pêne (3) dans ladite gâche (1) selon une direction d'insertion sensiblement horizontale.

2. Dispositif selon la revendication 1, **caractérisé en ce que** lesdits moyens de blocage (5 ; 6) comportent :
- un capot de blocage (6) apte à coopérer avec ladite portion sphérique de retenue (33) dudit pêne (3) et monté mobile entre une position verrouillée, dans laquelle ledit capot (6) obture ladite fente horizontale (17) et une position déverrouillée dans laquelle ledit capot (6) est éloigné de ladite fente horizontale (17) de manière à libérer ledit pêne (3) ; et
- un organe de commande (4) accessible par l'utilisateur et qui permet de faire passer ledit capot de blocage (6) de ladite position verrouillée à ladite position déverrouillée.

3. Dispositif selon la revendication 2, **caractérisé en ce que** ledit capot de blocage (6) comporte des moyens de rappel élastiques (64) qui sont disposés de manière à être mis en contrainte lorsque ladite portion sphérique de retenue (33) coopère avec ledit capot (6) et **en ce que** lesdits moyens de rappel (64) exercent une force apte à pousser ladite portion de liaison (31) dudit pêne (3) hors de ladite gâche (1), à travers ladite fente horizontale (17).

4. Dispositif selon la revendication 2 ou 3, **caractérisé en ce que** les moyens de blocage comportent en outre, une butée (5), montée mobile dans ladite gâche (1) entre une position verrouillée dans laquelle elle obture ladite fente verticale (16), et une position déverrouillée dans laquelle ladite butée (5) permet l'introduction de ladite portion sphérique de retenue (33) dudit pêne (3) dans ladite gâche (1) le long de ladite fente horizontale (17).

5. Siège de véhicule automobile du type comportant une assise (2) et un dossier (23), ladite assise (2) comportant un bord libre (22) opposé audit dossier (23), **caractérisé en ce qu'**il comporte un dispositif selon l'une quelconque des revendications précédentes et **en ce que** ladite fente horizontale (17) s'étend dudit bord libre vers ledit dossier (23).

6. Siège de véhicule automobile selon la revendication 5, **caractérisé en ce que** ladite fente horizontale (17) est disposée sensiblement dans le plan de ladite assise (2).

7. Siège selon l'une quelconque des revendications 5 et 6, **caractérisé en ce qu'**il comporte des rainures (21) ménagées dans ladite assise (2) de manière à guider ledit pêne (3) vers ladite fente verticale (16) de ladite gâche (1).
